(19) Europäisches Patentamt
European Patent Office
Office européen des brevets

(11) **EP 3 662 218 B1**

(12) **EUROPÄISCHE PATENTSCHRIFT**

(45) Veröffentlichungstag und Bekanntmachung des Hinweises auf die Patenterteilung:
**15.12.2021 Patentblatt 2021/50**

(21) Anmeldenummer: **18749770.6**

(22) Anmeldetag: **31.07.2018**

(51) Int Cl.:
**F25D 23/02** *(2006.01)* **F25D 29/00** *(2006.01)*

(86) Internationale Anmeldenummer:
**PCT/EP2018/070737**

(87) Internationale Veröffentlichungsnummer:
**WO 2019/025443 (07.02.2019 Gazette 2019/06)**

(54) **SENSORVORRICHTUNG FÜR EIN HAUSHALTSKÜHLGERÄT**

SENSOR DEVICE FOR A HOUSEHOLD COOLING APPLIANCE

DISPOSITIF DE DÉTECTION POUR UN APPAREIL FRIGORIFIQUE MÉNAGER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.08.2017 DE 102017213425**

(43) Veröffentlichungstag der Anmeldung:
**10.06.2020 Patentblatt 2020/24**

(73) Patentinhaber: **BSH Hausgeräte GmbH**
**81739 München (DE)**

(72) Erfinder:
• **BECHTLE, Teresa**
**84558 Kirchweidach (DE)**
• **FLOHRER, Nick**
**81827 München (DE)**
• **JOHANNISBORG, Daniel**
**83607 Holzkirchen (DE)**
• **KUHN, Tobias**
**67744 Hoppstädten (DE)**
• **SCHMÜCKER, Klaus**
**82319 Starnberg (DE)**
• **STROSCHE, Michael**
**65462 Ginsheim-Gustavsburg (DE)**
• **VAN GEFFEN, Wilhelmus J.F.**
**55543 Bad Kreuznach (DE)**

(56) Entgegenhaltungen:
EP-A1- 2 599 424 WO-A1-2017/052058
DE-A1-102015 203 150 US-A1- 2016 080 705

## Beschreibung

Die vorliegende Erfindung betrifft eine Sensorvorrichtung für ein Haushaltskühlgerät. Insbesondere betrifft die vorliegende Erfindung die Bestimmung, ob eine Schwenktür des Haushaltskühlgeräts einen vorbestimmten Schwellenwert erreicht hat.

Stand der Technik

Ein Haushaltskühlgerät, insbesondere ein Kühlschrank oder eine Kühl-Gefrierkombination, kann bezüglich seines Inhalts überwacht werden, indem eine auf der Innenseite des Haushaltskühlgeräts angebrachte Kamera zu vorbestimmten Zeitpunkten Bilder aufnimmt. Eine Vorratshaltung bzw. Vorratsplanung beispielsweise von Lebensmitteln, die im Haushaltskühlgerät vorgehalten werden sollen, kann dadurch unterstützt werden.

DE 10 2015 203 150 A1 betrifft einen Kühlschrank mit einer schwenkbaren Tür. Mittels eines Magnetsensors wird erfasst, wenn die Tür einen vorbestimmten Öffnungswinkel passiert. Wenn dies der Fall ist, kann mittels einer Kamera ein Bild des Innenraums des Kühlschranks aufgenommen werden. US 2016 216 374 A1 betrifft die Bestimmung einer rotatorischen Ausrichtung eines Smartphones mittels eines Gyrosensors. US 9 013 617 B2 schlägt vor, für die Bestimmung der Haltung einer Person Bilder einer Kamera und Messwerte eines Gyrosensors miteinander zu kombinieren. Aus der WO 2017/052058 A1 ist ein Kühlgerät mit einem Bildschirm vorbekannt, das eine Bewegung seiner Tür detektiert, um in Abhängigkeit der Bewegung den Bildschirm zu steuern. Die EP 2 599 424 A1 betrifft einen Geschirrspüler mit einem Gravitationssensor in der Tür.

Der vorliegenden Erfindung liegt die Aufgabe zugrunde, eine verbesserte Technik zur Bestimmung des Öffnungswinkels der Schwenktür eines Haushaltskühlgeräts anzugeben. Die Erfindung löst diese Aufgabe mittels der Gegenstände der unabhängigen Ansprüche. Unteransprüche geben bevorzugte Ausführungsformen wieder.

Offenbarung der Erfindung

Die vorliegende Erfindung ist in den unabhängigen Ansprüchen 1 und 12 offenbart. Weitere Ausführungsbeispiele sind in den abhängigen Ansprüchen offenbart.

Eine erfindungsgemäße Sensorvorrichtung kann an einer Schwenktür eines Haushaltskühlgeräts angebracht werden. Die Sensorvorrichtung umfasst einen Inertialsensor zur Bereitstellung eines Bewegungssignals und eine Verarbeitungseinrichtung. Die Verarbeitungseinrichtung ist dazu eingerichtet, auf der Basis des Bewegungssignals einen Schwenkwinkel der Schwenktür zu bestimmen und ein Signal auszugeben, wenn der Schwenkwinkel einen vorbestimmten Schwellenwert erreicht hat.

Durch Verwenden eines Inertialsensors kann die Sensorvorrichtung verbessert autark ausgebildet werden, sodass sie mit geringstem Aufwand an der Schwenktür angebracht oder nachgerüstet werden kann. Der Inertialsensor kann zuverlässig, genau oder kostengünstig sein.

Der Inertialsensor kann einen oder mehrere Beschleunigungssensoren (Translationssensoren) und/oder einen oder mehrere Drehratensensoren (Rotationssensoren) umfassen. Aus den Translations- bzw. Rotationssignalen kann der Schwenkwinkel verbessert bestimmt werden. Insbesondere ist bevorzugt, dass der Inertialsensor einen Drehratensensor umfasst. Der Schwenkwinkel der Schwenktür kann dadurch vereinfacht bestimmt werden.

Das Bewegungssignal des Drehratensensors betrifft bevorzugt eine Drehrate um eine Achse, die parallel zu einer Drehachse der Schwenktür verlaufen kann, wenn die Sensorvorrichtung an der Schwenktür angebracht ist. Dabei ist die Verarbeitungseinrichtung dazu eingerichtet, die Drehrate über die Zeit zu integrieren, um den Schwenkwinkel zu bestimmen. So kann auf einfache und direkte Weise der Schwenkwinkel auf der Basis des Ausgangssignals des Drehratensensors bestimmt werden. Die Drehrate kann beispielsweise periodisch bestimmt und numerisch integriert werden. Alternativ kann auch ein analoges Filter zur Integration verwendet werden.

Gemäß der vorliegenden Erfindung wird nur dann ein Signal ausgegeben, wenn der Schwenkwinkel einen vorbestimmten Schwellwert erreicht hat und bevorzugt wenn sich die Schwenktür in einer Schließbewegung befindet. Die Verarbeitungseinrichtung kann dazu eingerichtet sein, einen Betrag der Drehrate über die Zeit zu integrieren, um den Schwenkwinkel zu bestimmen. Um die Schließbewegung zu erkennen, kann darauf abgestellt werden, dass aus der geschlossenen Stellung der Schwellenwert zum zweiten Mal erreicht bzw. überschritten wird, oder das Signal kann ausgegeben werden, wenn der Schwenkwinkel den Schwellenwert erreicht und gleichzeitig eine Drehrate das gewünschte Vorzeichen besitzt. Dadurch kann sich der Vorteil ergeben, dass der Schwenkwinkel der Schwenktür, bei dessen Erreichen bspw. ein Foto geschossen werden soll, ganz genau bestimmt werden kann und das Foto nur beim Schließen der Schwenktür aufgenommen wird. Dies ist vorteilhaft, da auf diese Weise sichergestellt werden kann, dass alle Gegenstände bspw. im Kühlschrank auf dem Foto abgebildet sind, wobei der Zustand zu sehen ist, nachdem der Nutzer gewünschte Gegenstände aus dem Kühlschrank entnommen bzw. in den Kühlschrank hineingestellt hat.

Der Inertialsensor kann einen mikroelektromechanischen Sensor (MEMS: microelectromechanical sensor) umfassen. Ein solcher Sensor ist üblicherweise in Halbleitertechnologie aufgebaut und umfasst Komponenten mit Strukturgrößen im Bereich von ca. 1 bis 100 $\mu$m. Der mikroelektromechanische Sensor selbst kann eine Ausdehnung von ca. 20 bis 1000 µm in einer Dimension aufweisen. Ein derartiger Sensor kann als Massenartikel kostengünstig herstellbar sein. Durch seine geringe Größe kann er im Betrieb wenig Energie aufnehmen. Das Haushaltskühlgerät kann dadurch nicht unnötig erwärmt werden und ein Energiespeicher der Sensorvorrichtung kann länger halten.

Es ist weiter bevorzugt, dass der Inertialsensor eine oszillierende Probemasse umfasst. Im Gegensatz zu einer rotierenden Probemasse kann die oszillierende Probemasse kostengünstiger hergestellt werden und so aufgehängt sein, dass im Betrieb praktisch keine Reibung auftritt. Eine aufgenommene Leistung des Inertialsensors kann verringert und seine Lebensdauer gesteigert sein.

Weiter bevorzugt umfasst die Sensorvorrichtung eine Befestigungseinrichtung, die insbesondere zum Anbringen der Sensorvorrichtung an einem Fachboden auf der Innenseite der Schwenktür ausgebildet sein kann. Die Befestigungseinrichtung kann insbesondere eine Klammer, einen Saugnapf oder eine passend ausgebildete Anlagefläche umfassen. Bevorzugt ist die Befestigungseinrichtung dazu eingerichtet, die Sensorvorrichtung an der Unterseite des Fachbodens zu halten, sodass praktisch keine Abstellfläche im Inneren des Haushaltskühlgeräts durch die Sensorvorrichtung verloren geht. Alternativ ist natürlich auch eine Anbringung an der Innenseite der Tür möglich.

Die Verarbeitungseinrichtung ist dazu eingerichtet, zu bestimmen, dass die Schwenktür vollständig geschlossen ist, und den bestimmten Schwenkwinkel zu kalibrieren. Der Inertialsensor, insbesondere wenn er als mikroelektromechanischer Sensor ausgeführt ist, weist üblicherweise eine beschränkte Langzeitstabilität auf. Wird der Sensor über längere Zeit betrieben, so kann sich eine Drift akkumulieren, sodass fälschlich ein Bewegen der Schwenktür bestimmt werden könnte. Durch ein gelegentliches Kalibrieren kann ein solcher Fehler kompensiert werden. Der bestimmte Schwenkwinkel kann insbesondere auf null gesetzt werden, wenn die Schwenktür vollständig geschlossen ist. Auf diese Weise kann erreicht werden, dass der Schwenkwinkel einem Öffnungswinkel der Schwenktür entspricht.

Die Sensorvorrichtung kann eine Abtasteinrichtung zur Bestimmung, dass die Schwenktür geöffnet ist, umfassen. Einerseits kann dadurch das oben beschriebene Kalibrieren vereinfacht durchgeführt werden. Andererseits kann ein Teil der Sensorvorrichtung erst dann eingeschaltet werden, wenn die Schwenktür nicht mehr vollständig geschlossen ist. Zwar kann ein übliches Öffnen der Schwenktür an einem Haushaltskühlgerät eine große Winkelgeschwindigkeit im Bereich von ca. 90° pro Sekunde erreichen, jedoch ist die Drehbeschleunigung der Schwenktür im Bereich des geschlossenen Zustands beim Öffnen üblicherweise gering, sodass ein Messfehler durch den nicht unmittelbar zur Verfügung stehenden Inertialsensor beschränkt sein kann. Die Abtasteinrichtung kann beispielsweise einen Schalter umfassen, der anspricht, wenn die Schwenktür aus der vollständig geschlossenen Position bewegt wird. Alternativ kann die Abtasteinrichtung einen Lichtsensor umfassen, der das Aktivieren einer Innenbeleuchtung des Haushaltskühlgeräts bei sich öffnender Schwenktür erfasst. Die Abtasteinrichtung kann auch dadurch gebildet sein, dass die Verarbeitungseinrichtung dazu eingerichtet ist, zu bestimmen, dass sich der Schwenkwinkel der Schwenktür über längere Zeit nicht verändert. Zusätzlich kann beispielsweise geprüft werden, ob eine Temperatur im Bereich der Sensorvorrichtung unterhalb von beispielsweise 8 °C liegt, um sicherzustellen, dass nicht eine offen stehengelassene Schwenktür erfasst wird.

Die Sensorvorrichtung kann ferner eine Kamera umfassen, wobei die Verarbeitungseinrichtung dazu eingerichtet ist, mittels der Kamera ein Bild aufzunehmen, wenn der Schwenkwinkel der Schwenktür den vorbestimmten Schwellenwert erreicht hat. Die Sensorvorrichtung wird dazu bevorzugt auf der Innenseite der Schwenktür angebracht. Ein Aufnahmewinkel der Kamera kann dadurch verbessert gesteuert werden.

Die Sensorvorrichtung kann ferner eine drahtlose Kommunikationsschnittstelle umfassen, wobei die Verarbeitungseinrichtung dazu eingerichtet ist, das mittels der Kamera aufgenommene Bild über die Kommunikationsschnittstelle zu versenden. Eine empfangende Stelle kann insbesondere auf der Basis einer Vielzahl empfangener Bilder eine verbesserte Hilfestellung beispielsweise bei der Analyse von innerhalb des Haushaltskühlgeräts gelagerten Gegenständen bereitstellen.

Ein erfindungsgemäßes Haushaltskühlgerät umfasst die oben beschriebene Sensorvorrichtung. Die Sensorvorrichtung ist bevorzugt vom Haushaltskühlgerät lösbar und insbesondere dazu eingerichtet, autark zu arbeiten, kann jedoch auch so ausgeführt sein, dass sie fest mit dem Haushaltskühlgerät verbunden ist oder beispielsweise dessen Energieversorgung mitbenutzt.

Ein erfindungsgemäßes Verfahren nach dem Anspruch 12 zum Bereitstellen eines Signals, das darauf hinweist, dass eine Schwenktür eines Haushaltskühlgeräts einen vorbestimmten Schwenkwinkel erreicht hat, umfasst Schritte des Bestimmens eines Bewegungssignals mittels eines an der Schwenktür angebrachten Inertialsensors; des Bestimmens des Schwenkwinkels der Schwenktür auf der Basis des Bewegungssignals; und des Ausgebens des Signals, wenn der Schwenkwinkel den vorbestimmten Schwellenwert erreicht hat.

Das Verfahren ist zur Ausführung auf der Verarbeitungseinrichtung der oben beschriebenen Sensorvorrichtung eingerichtet.

Die mit Bezug auf eine Anspruchskategorie offenbarten Merkmale sind analog auf die anderen Anspruchskategorien anwendbar. Vorteile oder Merkmale der Sensorvorrichtung und des Verfahrens können also in beiden Richtungen übertragbar sein.

Kurze Zusammenfassung der Figuren

Die Erfindung wird nun unter Bezug auf die beiliegenden Figuren genauer beschrieben, in denen:

Fig. 1 ein System mit einem exemplarischen Haushaltskühlgerät und einer Sensorvorrichtung in einer Ausführungsform;

Fig. 2 eine Sensorvorrichtung in einer weiteren Ausführungsform;

Fig. 3 beispielhafte Verläufe an einer Sensorvorrichtung an einem Haushaltskühlgerät; und

Fig. 4 ein Ablaufdiagramm eines beispielhaften Verfahrens darstellt.

Alle technischen Merkmale der unabhängigen Ansprüche 1 und 12 sind obligatorisch für alle Ausführungsbeispiele.

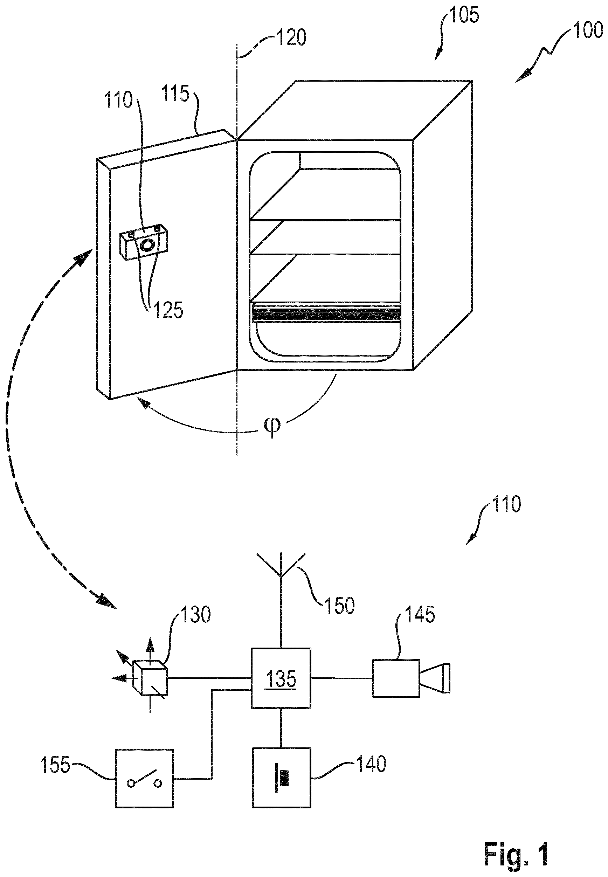

Figur 1 zeigt ein System 100 mit einem exemplarischen Haushaltskühlgerät 105 und einer Sensorvorrichtung 110 in einer Ausführungsform. Im oberen Bereich der Darstellung ist die Sensorvorrichtung 110 schematisch am Haushaltskühlgerät 105 angebracht dargestellt; im unteren Bereich ist die Sensorvorrichtung 110 in Form eines Strukturdiagramms dargestellt.

Das Haushaltskühlgerät 105 umfasst beispielsweise einen Kühlschrank, ein Tischkühlgerät, einen Gefrierschrank oder eine Kühl-Gefrierkombination. Das Haushaltskühlgerät 105 umfasst eine Schwenktür 115, die um eine Drehachse 120 geschwenkt werden kann, um das Haushaltskühlgerät 105 zu öffnen oder zu schließen. Häufig ist das Haushaltskühlgerät 105 dazu eingerichtet, alternativ so konfiguriert zu werden, dass die Schwenktür 115 wie dargestellt nach links öffnet, oder nach rechts. Allgemein muss die Drehachse 120 sich nicht in vertikaler Richtung erstrecken, sondern kann beispielsweise auch horizontal verlaufen, beispielsweise wenn das Haushaltskühlgerät 105 eine Kühltruhe umfasst.

Die Sensorvorrichtung 110 umfasst bevorzugt eine Befestigungseinrichtung 125, um sie im Bereich der Schwenktür 115 anzubringen. In der vereinfachten Darstellung von Figur 1 umfasst die Befestigungseinrichtung 125 beispielsweise einen oder mehrere Saugnäpfe, insbesondere zur Anbringung an einem Fachboden an der Schwenktür 115. Andere Befestigungseinrichtungen 125, beispielsweise formschlüssig oder mittels Klemmwirkung, sind ebenfalls denkbar. Die Sensorvorrichtung 110 ist bevorzugt dazu eingerichtet, autark arbeiten zu können. Dazu kann die Sensorvorrichtung 110 insbesondere ohne den Einsatz von Werkzeug an der Schwenktür 115 angebracht oder von ihr entfernt werden. Ein Nachrüsten eines bestehenden Haushaltskühlgeräts 105 kann dadurch vereinfacht sein.

Die Sensorvorrichtung 110 umfasst einen Inertialsensor 130, eine Verarbeitungseinrichtung 135, und bevorzugt eine lokale Energieversorgung 140. Optional können eine Kamera 145, eine bevorzugt drahtlose Kommunikationsschnittstelle 150 und/oder eine Abtasteinrichtung 155 von der Sensorvorrichtung 110 umfasst sein.

Der Inertialsensor 130 ist dazu eingerichtet, eine Bewegung oder Bewegungsänderung zu erfassen. Bevorzugt umfasst der Inertialsensor 130 einen Drehratensensor, der dazu eingerichtet ist, eine Drehrate zu bestimmen, die auf eine Achse bezogen ist, die parallel zur Drehachse 120 der Schwenktür 115 verläuft oder mit dieser zusammenfällt. Die Verarbeitungseinrichtung 135 kann insbesondere einen programmierbaren Mikrocomputer oder Mikrocontroller umfassen. Die lokale Energieversorgung 140 umfasst bevorzugt eine Batterie oder einen Akkumulator. In einer weiteren Ausführungsform kann auch eine Schnittstelle zur Verbindung der Sensorvorrichtung 110 mit einem Energienetz des Haushaltskühlgeräts 105 vorgesehen sein. Über diese Schnittstelle kann die Sensorvorrichtung 110 bevorzugt vom Haushaltskühlgerät 105 mit elektrischer Energie versorgt werden.

Die Kamera 145 ist bezüglich ihrer Ausrichtung und/oder Brennweite bevorzugt dazu eingerichtet, einen Inhalt des Haushaltskühlgeräts 105 zu fotografieren, wenn ein Schwenkwinkel $\varphi$ der Schwenktür 115 des Haushaltskühlgeräts 105 einen vorbestimmten Schwellenwert erreicht hat. Dazu kann die Kamera 145 ein Blitzgerät umfassen. Die Kommunikationsschnittstelle 150 ist bevorzugt drahtlos ausgelegt und kann beispielsweise nach dem WiMAX-, Bluetooth- oder WLAN-Standard arbeiten.

Es wird vorgeschlagen, dass die Verarbeitungseinrichtung 135 den Drehwinkel $\varphi$ der Schwenktür 115 des Haushaltskühlgeräts 105 auf der Basis eines Signals des Inertialsensors 130 bestimmt, diesen mit einem Schwellenwert vergleicht und in Abhängigkeit des Vergleichsergebnisses die Kamera 145 dazu ansteuert, ein Bild vom Innenraum des Haushaltskühlgeräts 105 aufzunehmen. Anders als in der oberen Darstellung von Figur 1 ist der Drehwinkel $\varphi$ üblicherweise kleiner als 90°, sodass die Kamera 145 bevorzugt den gesamten Innenraum des Haushaltskühlgeräts 105 einsehen kann. Es ist allgemein bevorzugt, dass die Sensorvorrichtung 110 in möglichst großem radialem Abstand von der Drehachse 120 der Schwenktür 115 des Haushaltskühlgeräts 105 angebracht wird. Eine Perspektive der Kamera 145 kann dadurch verbessert sein. Außerdem kann das Bestimmen eines Beschleunigungssignals mittels des Inertialsensors 130 dadurch vereinfacht sein.

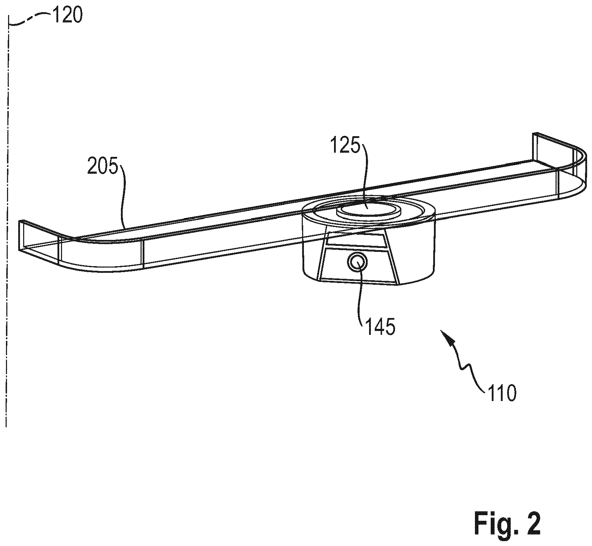

Figur 2 zeigt eine Sensorvorrichtung 110 in einer weiteren Ausführungsform. Die Sensorvorrichtung 110 ist im Wesentlichen in Form eines flachen Zylinders realisiert und trägt bevorzugt an ihrer Oberseite die Befestigungseinrichtung 125. Die Sensorvorrichtung 110 ist bevorzugt zur Anbringung unterhalb eines Fachbodens 205 eingerichtet, der an der Innenseite der Schwenktür 115 eines Haushaltskühlgeräts 105 befestigt sein kann. Bevorzugt umfasst der Fachboden 205 eine Glasplatte oder Kunststoffplatte, an der die als Saugnapf ausgeführte Befestigungseinrichtung 125 vorteilhaft gut eingreifen kann.

Ist der Inertialsensor 130 ein Drehratensensor, der dazu eingerichtet ist, eine Drehrate bereitzustellen, so kann die Verarbeitungseinrichtung 135 den Schwenkwinkel φ aufgrund des folgenden Zusammenhangs bestimmen:

$$\theta = \int_{o}^{t} \omega \partial t \; ;$$

wobei $\theta$ der Schwenkwinkel (φ), ω die Drehrate und t die Integrationszeit ist.

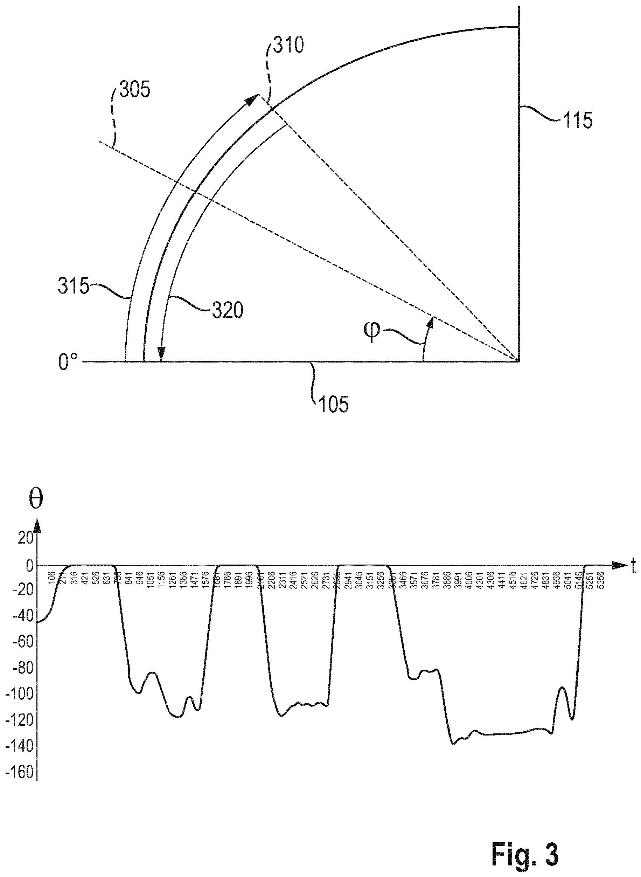

Figur 3 zeigt beispielhafte Verläufe an einer Sensorvorrichtung 110 an einem Haushaltskühlgerät 105 nach der Art von Figur 1. Im oberen Bereich ist eine schematische Draufsicht auf das Haushaltskühlgerät 105 und im unteren Bereich ein zeitlicher Verlauf des bestimmten Schwenkwinkels φ dargestellt. Dabei wurde der Schwenkwinkel φ auf die oben angegebene Weise aufgrund von Messwerten eines Drehratensensors 130 an der Schwenktür 115 über die Zeit integriert. Die dargestellten Größen sind als exemplarisch aufzufassen.

Eine Stellung der Schwenktür 115, bei der die Kamera 145 zur Anfertigung eines Bildes angesteuert werden soll, ist als Schwellenwert 305 in Figur 3 schematisch dargestellt. Der Schwellenwert 305 ist bevorzugt kleiner als ein üblicher Schwenkwinkel 310, der auftritt, wenn ein Benutzer die Schwenktür 115 öffnet und wieder schließt. Eine exemplarische Öffnungsbewegung 315 und eine dazu korrespondierende Schließbewegung 320 sind in Figur 3 eingezeichnet.

Es ist bevorzugt, dass das beschriebene Bild dann aufgenommen wird, wenn der Schwenkwinkel φ den Schwellenwert 305 erreicht oder überschreitet und sich die Schwenktür 115 in der Schließbewegung 320 befindet. Dazu kann entweder bestimmt werden, dass aus der geschlossenen Stellung (φ = 0°) der Schwellenwert 305 zum zweiten Mal erreicht bzw. überschritten wird, oder die Aufnahme kann angesteuert werden, wenn der Drehwinkel φ den Schwellenwert 305 erreicht und gleichzeitig die Drehrate ω das gewünschte Vorzeichen hat. In der vorliegenden Darstellung ist ω > 0, wenn die Schließbewegung 320 vollführt wird.

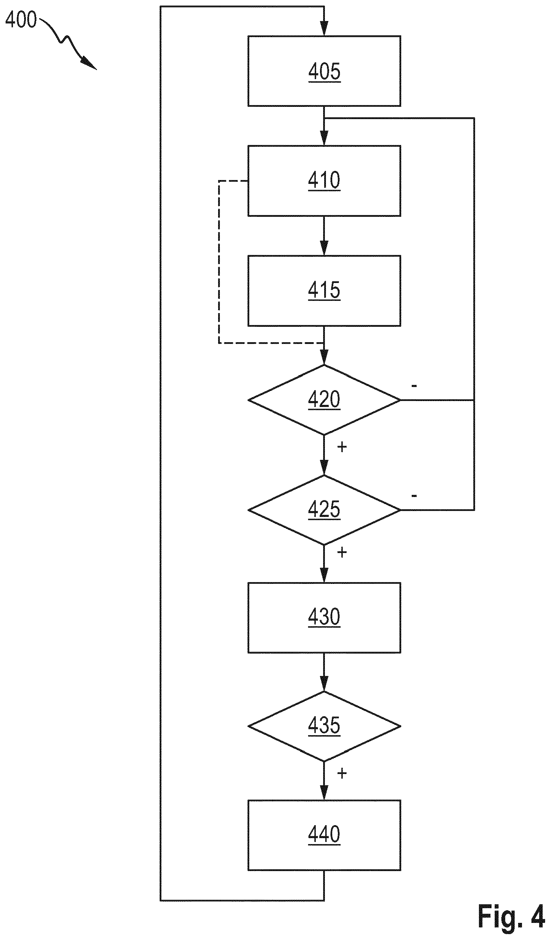

Figur 4 zeigt ein Ablaufdiagramm eines beispielhaften Verfahrens 400. Das Verfahren 400 ist bevorzugt zum Steuern einer Sensorvorrichtung 110 der Art von Figur 1 eingerichtet. Das Verfahren 400 beginnt in einem Schritt 405. In einem Schritt 410 wird mittels eines als Drehratensensor ausgebildeten Inertialsensors 130 die Drehrate der Schwenktür 115 bestimmt. In einem Schritt 415 wird die Drehrate über die Zeit integriert, um den Drehwinkel φ zu bestimmen. Optional kann in einem Schritt 420 bestimmt werden, ob sich die Schwenktür 115 in der Öffnungsbewegung 315 oder der Schließbewegung 320 befindet, wie oben beschrieben wurde. Liegt die falsche Bewegung 315 vor, so kann das Verfahren 400 zum Schritt 410 zurückkehren. Andernfalls kann in einem Schritt 425 überprüft werden, ob der Schwenkwinkel φ den vorbestimmten Schwellenwert 305 erreicht hat. Ist dies nicht der Fall, so kann das Verfahren 400 mit dem Schritt 410 fortfahren.

Andernfalls wird in einem Schritt 430 ein Signal ausgegeben, das beispielsweise zur Ansteuerung der Kamera 145 zur Aufnahme eines Bildes verwendet werden kann. Es kann auch eine Blitzvorrichtung ausgelöst werden. Das angefertigte Bild kann anschließend mittels der Kommunikationsschnittstelle 150 an eine externe Stelle übermittelt werden. Anschließend kann das Verfahren 400 wieder zum Anfang zurückkehren.

Gemäß der vorliegenden Erfindung wird der bestimmte Drehwinkel φ gelegentlich kalibriert. Dazu wird in einem Schritt 435 bestimmt, ob die Schwenktür 115 des Haushaltskühlgeräts 105 vollständig geschlossen ist. Bevorzugt wird dazu festgestellt, dass die Drehrate über eine vorbestimmte Zeit hinweg konstant bleibt bzw. sich der bestimmte Drehwinkel φ über diese Zeit im Wesentlichen nicht ändert. Kann nicht bestimmt werden, dass die Schwenktür 115 geschlossen ist, so kann der Kalibrierungsversuch abgebrochen werden und das Verfahren 400 kann zum Anfang zurückkehren. Andernfalls wird in einem Schritt 440 der bestimmte Drehwinkel φ auf einen vorbestimmten Wert ge-setzt, insbesondere den Wert null. Anschließend kann das Verfahren 400 zum Anfang zurückkehren und erneut durchlaufen.

Das Kalibrieren des bestimmten Drehwinkels φ in den Schritten 435, 440 kann auch an einer anderen Stelle des Verfahrens 400 durchgeführt werden. Eine vorbestimmte Zeit nach dem Wiedererreichen der vollständig geschlossenen Position der Schwenktür 115 kann der Inertialsensor 130 wieder ausgeschaltet werden.

Bezugszeichen

| | |
|---|---|
| 100 | System |
| 105 | Haushaltskühlgerät |
| 110 | Sensorvorrichtung |
| 115 | Schwenktür |
| 120 | Drehachse |
| 125 | Befestigungseinrichtung |
| 130 | Inertialsensor |
| 135 | Verarbeitungseinrichtung |
| 140 | Energieversorgung |
| 145 | Kamera |
| 150 | drahtlose Kommunikationsschnittstelle |
| 155 | Abtasteinrichtung |
| 205 | Fachboden |
| 305 | Schwellenwert |
| 310 | üblicher Schwenkwinkel |
| 315 | Öffnungsbewegung |

320 Schließbewegung

400 Verfahren
405 Start
410 Drehrate bestimmen
415 Schwenkwinkel bestimmen
420 Rückweg?
425 Schwellenwert erreicht?
430 Kamera auslösen, Blitz auslösen, Bild übermitteln
435 Tür zu?
440 Schwenkwinkel kalibrieren

**Patentansprüche**

1. Sensorvorrichtung (110) für ein Haushaltskühlgerät (105) mit einer Schwenktür (115),
wobei die Sensorvorrichtung (110) dazu eingerichtet ist, an der Schwenktür (115) des Haushaltskühlgeräts (105) angebracht zu werden, und folgendes umfasst:

   - einen Inertialsensor (130) zur Bereitstellung eines Bewegungssignals; und
   - eine Verarbeitungseinrichtung (135), die dazu eingerichtet ist, auf Basis des Bewegungssignals einen Schwenkwinkel ($\varphi$) der Schwenktür (115) zu bestimmen und
   - ein Signal auszugeben, wenn der Schwenkwinkel ($\varphi$) einen vorbestimmten Schwellenwert (305) erreicht hat;

   **dadurch gekennzeichnet, dass**

   - die Verarbeitungseinrichtung (135) dazu eingerichtet ist, zu bestimmen dass die Schwenktür (115) vollständig geschlossen ist, und den bestimmten Schwenkwinkel ($\varphi$) dann gelegentlich zu kalibrieren.

2. Sensorvorrichtung (110) nach Anspruch 1, wobei der Inertialsensor (130) einen Drehratensensor umfasst.

3. Sensorvorrichtung (110) nach Anspruch 2, wobei das Bewegungssignal eine Drehrate um eine Achse betrifft, die vorzugsweise parallel zu einer Drehachse (120) der Schwenktür (115) verläuft, wenn die Sensorvorrichtung an der Schwenktür angebracht ist, und die Verarbeitungseinrichtung (135) dazu eingerichtet ist, die Drehrate über die Zeit zu integrieren, um den Schwenkwinkel ($\varphi$) zu bestimmen.

4. Sensorvorrichtung (110) nach einem der vorangehenden Ansprüche, wobei nur dann ein Signal ausgegeben wird, wenn der Schwenkwinkel einen vorbestimmten Schwellwert erreicht hat und sich die Schwenktür in einer Schließbewegung befindet.

5. Sensorvorrichtung (110) nach einem der vorangehenden Ansprüche, wobei der Inertialsensor (130) einen mikroelektromechanischen Sensor umfasst.

6. Sensorvorrichtung (110) nach einem der vorangehenden Ansprüche, wobei der Inertialsensor (130) eine oszillierende Probemasse umfasst.

7. Sensorvorrichtung (110) nach einem der vorangehenden Ansprüche, ferner umfassend eine Befestigungseinrichtung (125) zur Anbringung der Sensorvorrichtung (110) an einem Fachboden (205) auf der Innenseite der Schwenktür (115).

8. Sensorvorrichtung (110) nach einem der vorangehenden Ansprüche, ferner umfassend eine Abtasteinrichtung (155) zur Bestimmung, dass die Schwenktür (115) geöffnet ist.

9. Sensorvorrichtung (110) nach einem der vorangehenden Ansprüche, ferner umfassend eine Kamera (145), wobei die Verarbeitungseinrichtung (135) dazu eingerichtet ist, mittels der Kamera (145) ein Bild aufzunehmen, wenn der Schwenkwinkel ($\varphi$) der Schwenktür (115) den vorbestimmten Schwellenwert (305) erreicht hat.

10. Sensorvorrichtung (110) nach Anspruch 9, ferner umfassend eine drahtlose Kommunikationsschnittstelle (150), wobei die Verarbeitungseinrichtung (135) dazu eingerichtet ist, das aufgenommene Bild über die Kommunikationsschnittstelle (150) zu versenden.

11. Haushaltskühlgerät (105), umfassend eine Sensorvorrichtung (110) nach einem der vorangehenden Ansprüche.

12. Verfahren (400) zum Bereitstellen eines Signals mit einer Sensorvorrichtung (110) nach Anspruch 1, das darauf hinweist, dass eine Schwenktür (115) eines Haushaltskühlgeräts (105) einen vorbestimmen Schwenkwinkel ($\varphi$) erreicht hat, wobei das Verfahren (400) folgende Schritte umfasst:

   - Bestimmen (410) eines Bewegungssignals mittels eines an der Schwenktür (115) angebrachten Inertialsensors (130);
   - Bestimmen (415) des Schwenkwinkels ($\varphi$) der Schwenktür (115) auf der Basis des Bewegungssignals; und
   - Ausgeben (430) des Signals, wenn der Schwenkwinkel ($\varphi$) den vorbestimmten Schwellenwert (305) erreicht hat;

   **gekennzeichnet durch** die Schritte:

- Bestimmen, dass die Schwenktür (115) vollständig geschlossen ist, und
- danach ein gelegentliches Kalibrieren des bestimmten Schwenkwinkels (φ).

**Claims**

1. Sensor device (110) for a household refrigeration appliance (105), having a pivoting door (115), wherein the sensor device (110) is designed to be attached to the pivoting door (115) of the household refrigeration appliance (105), and comprises the following:

   - an inertial sensor (130) for providing a motion signal; and
   - a processing device (135) which is designed to determine a pivoting angle (φ) of the pivoting door (115) on the basis of the motion signal, and
   - to output a signal if the pivoting angle (φ) has reached a predetermined threshold value (305)

   **characterised in that**

   - the processing device (135) is designed to determine that the pivoting door (115) is completely closed, and then to occasionally calibrate the determined pivoting angle (φ).

2. Sensor device (110) according to claim 1, wherein the inertial sensor (130) comprises a rotation rate sensor.

3. Sensor device (110) according to claim 2, wherein the motion signal relates to a rotation rate about an axis which preferably runs parallel to an axis of rotation (120) of the pivoting door (115) if the sensor device is attached to the pivoting door, and the processing device (135) is designed to integrate the rotation rate over time in order to determine the pivoting angle (φ).

4. Sensor device (110) according to one of the preceding claims, wherein a signal is only output if the pivoting angle has reached a predetermined threshold value and the pivoting door is performing a closing movement.

5. Sensor device (110) according to one of the preceding claims, wherein the inertial sensor (130) comprises a microelectromechanical sensor.

6. Sensor device (110) according to one of the preceding claims, wherein the inertial sensor (130) comprises an oscillating sample mass.

7. Sensor device (110) according to one of the preceding claims, further comprising a fastening mechanism (125) for attaching the sensor device (110) to a shelf (205) on the inside of the pivoting door (115).

8. Sensor device (110) according to one of the preceding claims, further comprising a scanner (155) for determining that the pivoting door (115) is open.

9. Sensor device (110) according to one of the preceding claims, further comprising a camera (145), wherein the processing device (135) is designed to take a photo by means of the camera (145) if the pivoting angle (φ) of the pivoting door (115) has reached the predetermined threshold value (305).

10. Sensor device (110) according to claim 9, further comprising a wireless communications interface (150), wherein the processing device (135) is adapted to send the photo that has been taken via the communications interface (150).

11. Household refrigeration appliance (105), comprising a sensor device (110) according to one of the preceding claims.

12. Method (400) for providing a signal with a sensor device (110) according to claim 1, which indicates that a pivoting door (115) of a household refrigeration appliance (105) has reached a predetermined pivoting angle (φ), wherein the method (400) comprises the following steps:

   - determining (410) a motion signal by means of an inertial sensor (130) attached to the pivoting door (115),
   - determining (415) the pivoting angle (φ) of the pivoting door (115) on the basis of the motion signal, and
   - outputting (430) the signal if the pivoting angle (φ) has reached the predetermined threshold value (305).

   **characterised by** the steps:

   - determining that the pivoting door (115) is completely closed, and
   - subsequently occasionally calibrating the determined pivoting angle (φ).

**Revendications**

1. Dispositif de détection (110) pour un appareil frigorifique électroménager (105) comprenant une porte pivotante (115),
   dans lequel le dispositif de détection (110) est prévu pour être accolé à la porte pivotante (115) de l'appareil frigorifique électroménager (105), et comprend:

- un détecteur inertiel (130) pour fournir un signal de mouvement : et
- un dispositif de traitement (135) prévu pour déterminer, sur base du signal de mouvement, un angle de pivotement (φ) de la porte pivotante (115)
et
- émettre un signal quand l'angle de pivotement (φ) a atteint une valeur de seuil (305) prédéterminée,

**caractérisé en ce que**

- le dispositif de traitement (135) est prévu pour déterminer que la porte pivotante (115) est entièrement fermée et calibrer alors en l'occurrence l'angle de pivotement (φ) déterminé.

2. Dispositif de détection (110) selon la revendication 1, dans lequel le détecteur inertiel (130) comprend un détecteur de vitesse de rotation.

3. Dispositif de détection (110) selon la revendication 2, dans lequel le signal de mouvement concerne une vitesse de rotation autour d'un axe, qui passe de préférence parallèlement à un axe de rotation (120) de la porte pivotante (115), quand le dispositif de détection est accolé à la porte pivotante et le dispositif de traitement (135) est prévu pour intégrer la vitesse de rotation en fonction du temps pour déterminer l'angle de pivotement (φ).

4. Dispositif de détection (110) selon l'une des revendications précédentes, dans lequel un signal n'est émis que quand l'angle de pivotement a atteint une valeur de seuil prédéterminée et que la porte pivotante se trouve dans un mouvement de fermeture.

5. Dispositif de détection (110) selon l'une des revendications précédentes, dans lequel le détecteur inertiel (130) comprend un détecteur microélectromécanique.

6. Dispositif de détection (110) selon l'une des revendications précédentes, dans lequel le détecteur inertiel (130) comprend une matière d'essai oscillante.

7. Dispositif de détection (110) selon l'une des revendications précédentes, comprenant en outre un dispositif de fixation (125) pour accoler le dispositif de détection (110) à un plancher de compartiment (205) sur le côté intérieur de la porte pivotante (115).

8. Dispositif de détection (110) selon l'une des revendications précédentes, comprenant en outre un dispositif palpeur (155) qui détermine que la porte pivotante (115) est ouverte.

9. Dispositif de détection (110) selon l'une des revendications précédentes, comprenant en outre une caméra (145), dans lequel le dispositif de traitement (135) est prévu pour prendre une photo au moyen de la caméra (145) quand l'angle de pivotement (φ) de la porte pivotante (115) a atteint la valeur de seuil (305) prédéterminée.

10. Dispositif de détection (110) selon la revendication 9, comprenant en outre une interface de communication (150) sans fil, dans lequel le dispositif de traitement (135) est prévu pour envoyer la photo prise par l'interface de communication (150).

11. Appareil frigorifique électroménager (105), comprenant un dispositif de détection (110) selon l'une des revendications précédentes.

12. Procédé (400) de fourniture d'un signal à l'aide d'un dispositif de détection (110) selon la revendication 1, lequel informe que la porte pivotante (115) d'un appareil frigorifique électroménager (105) a atteint un angle de pivotement (φ) prédéterminé, le procédé (400) comprenant les étapes suivantes :

- détermination (410) d'un signal de mouvement au moyen d'un détecteur inertiel (130) accolé à la porte pivotante (115) ;
- détermination (415) de l'angle de pivotement (φ) de la porte pivotante (115) sur base du signal de mouvement : et
- émission (430) du signal, quand l'angle de pivotement (φ) a atteint la valeur de seuil (305) prédéterminée,

**caractérisé par** les étapes suivantes:

- détermination que la porte pivotante (115) est entièrement fermée, et
- ensuite calibrage en l'occurrence de l'angle de pivotement (φ) déterminé.

**Fig. 1**

Fig. 2

Fig. 3

400

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015203150 A1
- US 2016216374 A1
- US 9013617 B2
- WO 2017052058 A1
- EP 2599424 A1